# FASCICULE DE BREVET EUROPEEN

(11) **EP 0 655 745 B1**
(45) Date de publication et mention de la délivrance du brevet: **31.05.2000**
(21) Numéro de dépôt: 94402660.8
(22) Date de dépôt: 22.11.1994
(51) Int. Cl.: C22C 16/00, G21C 3/07

(54) **Procédé de fabrication d'un tube de gainage pour crayon de combustible nucléaire et tubes conformes à ceux ainsi obtenus**
Verfahren zur Erzeugung eines Hüllrohres für einen Kernbrennstab und Rohre auf diese Weise hergestellt
Method of fabricating cladding tubes for nuclear fuel rods and so fabricated tubes

(30) Priorité: 25.11.1993 FR 9314107
(43) Date de publication de la demande: 31.05.1995
(73) Titulaire: FRAMATOME, 92400 Courbevoie (FR); COMPAGNIE GENERALE DES MATIERES NUCLEAIRES, 78140 Velizy Villacoublay (FR); Compagnie Européenne du Zirconium CEZUS, F-92400 Courbevoie (FR); ZIRCOTUBE, F-92400 Courbevoie (FR)
(72) Inventeur: Mardon, Jean-Paul, F-69300 Caluire (FR); Senevat, Jean, F-44250 Saint-Brevin-Les-Pins (FR); Charquet, Daniel, F-73200 Albertville (FR)
(74) Mandataire: Fort, Jacques

(56) Documents cités:
- EP-A- 0 085 553
- EP-A- 0 196 286
- EP-A- 0 296 972
- EP-A- 0 552 098
- WO-A-93/17137
- DE-A- 3 805 124
- US-A- 5 254 308
- F. Garzarolli et al. "Microstructure and Corrosion Studies for Optimized PWR and BWR Zircaloy Cladding", Zirconium in the Nuclear Industry, 8ème Symposium International, 19-23 juin 1988, San Diego, California

## Description

La présente invention concerne les procédés de fabrication de tube en alliage de zirconium destiné à constituer la gaine d'un crayon de combustible nucléaire. Elle trouve une application particulièrement importante, bien que non exclusive, dans le domaine de la fabrication de tubes de gainage pour les crayons de combustible destinés aux réacteurs nucléaires à eau sous pression.

On a jusqu'ici surtout utilisé des gaines en un alliage à base de zirconium, dit "Zircaloy 4", qui contient notamment, en poids,
- 1,20 à 1,70% d'étain,
- 0,18 à 0,24% de fer,
- 0,07 à 0,13% de chrome,
le total des teneurs en fer et chrome étant compris entre 0,28 et 0,37%. Classiquement, le rapport entre les teneurs en fer et en chrome est compris entre 1,38 et 3,42 environ.

La tenue mécanique des gaines en "Zircaloy 4" s'est révélée satisfaisante, mais, en revanche, leur corrosion par l'eau sous pression à haute température a limité la durée de maintien admissible en réacteur.

On a en conséquence déjà proposé des tubes de gainage comprenant une couche interne en "Zircaloy 4" et une couche externe en un alliage à base de zirconium ayant une teneur réduite en étain, mais en contrepartie une teneur en oxygène élevée, allant de 1900 à 2300 ppm (EP-A-0 552 098). De tels tubes donnent des résultats satisfaisants, à condition que la gaine soit à l'état métallurgiquement détendu, mais leur fabrication est plus complexe que celle d'un tube de constitution homogène.

On a enfin déjà proposé (EP-A-0 196 286) un procédé de fabrication de tubes de gainage en alliage à base de zirconium contenant 1 à 5% en poids d'éléments d'alliage tels que Sn, Fe, Cr et Ni, suivant lequel on recuit le tube-ébauche provenant du filage avant de le soumettre à des laminages à froid en phase α pouvant être séparés par des recuits tels que la somme ΣA soit supérieure à 2,3.10⁻¹⁴, en tenant compte de la contribution du recuit après filage. Le premier laminage est effectué sur le tube provenant de filage, sans recuit intermédiaire.

Le terme ΣA désigne la somme, pour l'ensemble des recuits, des produits des temps t (en heures) et de l'exponentielle de -Q/RT, T étant la température en K.

Dans le calcul de ΣA, le document cité part de l'hypothèse que Q est d'environ 65.000 cal/mole.

La présente invention vise à fournir un procédé de fabrication de tube de gainage répondant mieux que ceux antérieurement connus aux exigences de la pratique, notamment en ce qu'il permet de concilier une résistance élevée à la corrosion généralisée dans un milieu aqueux à haute température, une tenue satisfaisante au fluage thermique et une bonne résistance à la corrosion sous contrainte.

Dans ce but, l'invention propose notamment un procédé de fabrication de tube pour gaine de crayon de combustible nucléaire, tel que défini dans la revendication 1.

L'invention concerne aussi un tube pour gaine de crayon combustible nucléaire ayant les caractéristiques de la revendication 10, avantageusement de la revendication 11 ou 12.

Dans le cas des alliages considérés, Q/R (rapport entre l'énergie d'activation Q et la constante générale des gaz, proche de 2) est d'environ 40.000 K⁻¹.

L'ensemble des traitements thermiques conduit dans ces conditions permet d'obtenir une taille convenable des précipités et une mise en équilibre des phases, avec un dernier recuit effectué à une température comprise entre 450°C (avantageusement 470°C) et 500°C de façon à répartir judicieusement le fer entre les différents précipités Zr(Cr/Fe)₂-Zr₂FeSi-Zr₂FeNi-Zr₂Fe et Zr₃Fe de manière à obtenir un rapport Fe/Cr dans Zr(Cr/Fe)₂ compris entre 2,2 et 2,6, rapport qui peut être obtenu avec un rapport pondéral entre le fer et le chrome dans l'alliage jusqu'à 3.

La limite supérieure de 3 pour le rapport Fe/Cr est celle au-delà de laquelle le fluage augmente et la tenue à la corrosion sous contrainte est notablement dégradée. Un rapport inférieur à 1,6 conduit à une dispersion élevée de la résistance à la corrosion pour une même composition.

La plage comprise entre 1,6 et 3 s'est révélée particulièrement intéressante, car la dispersion des résultats (en matière de résistance à la corrosion généralisée) est relativement faible autour d'une moyenne et la résistance à la corrosion est particulièrement élevée. La corrosion est minimale pour un rapport d'environ 2,4 (le rapport précis dépendant de la vitesse de trempe adoptée) et n'augmente que lentement au-delà de 2,4. Dans la pratique, le meilleur compromis (corrosion faible, nature et taille optimale des précipités, résistance au fluage) correspond à un rapport Fe/Cr compris entre 2,2 et 2,6.

La séquence complète de fabrication à partir d'un lingot d'alliage peut comporter, de façon générale :
- un forgeage de constitution de ronds ou barres, par exemple de 180 mm de diamètre pour des tubes finaux de 9,5 mm de diamètre ;
- une trempe en phase β ;
- un usinage interne, par exemple à un diamètre de 70 mm ;
- une trempe en phase β, suivie d'un recuit ;
- un filage à chaud, à l'issue duquel on a un tube-ébauche en phase α ;
- une séquence thermodynamique constituée des laminages avec recuits intermédiaires.

Le produit provenant du filage (ébauche tubulaire obtenue par filage, d'épaisseur supérieure à l'épaisseur finale) est dénommé "trex". Il est soumis aux séquences de laminage-recuit successives.

Le rond ou barre est obtenu par fusions et solidifications successives puis déformation à chaud ; il ou elle est soumis à la trempe, suivie éventuellement d'un recuit. Une vitesse de trempe comprise entre 5°C et 30°C par seconde à partir d'une température supérieure à 1000°C donne, pour les teneurs Fe/Cr ci-dessus définies, une nature et une taille de précipités contribuant finalement à une résistance élevée à la corrosion généralisée. Cette taille intermédiaire sera avantageusement telle qu'elle donne naissance, à l'issue de la séquence complète de traitements, à une taille finale de précipités supérieure à 0,18µm, qui s'est révélée particulièrement favorable.

Une explication possible de l'effet défavorable sur le fluage d'un rapport Fe/Cr plus élevé que celui qui est défini ici (l'exactitude de cette hypothèse devant être considérée comme sans incidence sur la validité du brevet) est que l'augmentation du rapport Fe/Cr augmente de façon excessive la taille des précipités Zr(Fe,Cr)₂ et modifie la nature des phases en faisant apparaître, entre autres, la phase précipitée Zr₂Fe. Quant à la présence d'un minimum de la cinétique de corrosion généralisée, il est vraisemblable qu'elle est liée à une compétition entre plusieurs mécanismes de formation de phases précipitées.

Il est par ailleurs apparu que le rapport Fe/Cr dans la plage ci-dessus n'a pas d'incidence sur la fraction d'hydrogène absorbé en milieu aqueux à haute température.

Les résultats favorables obtenus par l'invention dépendent non seulement d'un choix approprié du rapport Fe/Cr, mais aussi de l'emploi d'une séquence appropriée de traitements métallurgiques et thermiques, terminée par un recuit amenant le tube à l'état détendu. Ce recuit peut comporter un maintien d'au moins quatre heures entre 470°C et 500°C.

La séquence peut notamment comporter certaines ou l'ensemble des étapes métallurgiques et thermiques suivantes :
- initialement, fabrication d'une barre par fusions et solidifications successives sous vide d'un lingot, puis forgeage avec une trempe finale dans le domaine β, à une vitesse de refroidissement comprise entre 5°C par seconde et 30°C par seconde à partir d'une température supérieure à 1000°C et jusqu'à 800°C environ;
- amenée de la barre en phase α par recuit, après trempe β, à une température comprise entre 700°C et 750°C, avantageusement environ 715°C, pendant quatre à six heures, avantageusement environ cinq heures ;
- filage sous forme d'ébauche, en phase α ;
- au moins une séquence de laminage à froid, sans recuit préalable, et de recuit entre 700°C et 750°C (en général 720-740°C et avantageusement 730°C environ), pendant une à trois heures ;
- laminages successifs sous forme de tubes d'épaisseur décroissante et recuits intermédiaires sous argon à une température comprise entre 640°C et 740°C, avantageusement vers 700°C ;
- recuit final de détente entre 470°C à 500°C, encore en atmosphère inerte, généralement d'argon, le tube restant en phase α.

Le tube ainsi réalisé ne subit plus de traitements thermiques modifiant sa structure métallurgique. En revanche, il reçoit encore des traitements de surface et il est soumis à examen avant d'être utilisé en tant que gaine.

Le traitement de surface peut notamment comporter un sablage et un décapage chimique par un mélange HF-HNO₃, suivi d'un rinçage. Il est ensuite poli à l'aide d'une bande en circulation ou d'une roue. Le contrôle peut être effectué de façon classique par ultrasons, courants de Foucault et/ou visuellement.

Parmi les compositions d'alliage définies ci-dessus, certaines se sont révélées particulièrement intéressantes. On peut en particulier adopter une composition dont les teneurs en étain, en fer et en chrome sont conformes à celles correspondant à la définition du "Zircaloy 4", donnée ci-dessus, avec 0,075 à 0,10 % de chrome, et cela avec un rapport Fe/Cr compris entre 1,9 et 2,5, et de plus 50 à 120 ppm de silicium et 80 à 200 ppm de carbone.

Une autre composition particulièrement intéressante pour la constitution de tubes de gainage destinés à des réacteurs à eau sous pression, peut être qualifiée de "bas étain dopé en oxygène". Elle contient 0,18 à 0,25% de fer, 0,075 à 0,10% de chrome, 0,45 à 0,75% d'étain, 50 à 120 ppm de silicium, 80 à 200 ppm de carbone et 1900 à 2300 ppm d'oxygène.

Les tubes ainsi obtenus ont une résistance élevée aux différents types de corrosion, y compris en présence d'iode.

On décrira maintenant, à titre d'exemple, une gamme de fabrication utilisable.

L'alliage de départ se présente sous forme d'un lingot. Par fusions et solidifications successives sous vide, au nombre de trois par exemple, il est mis sous forme d'une barre qui est trempée à l'eau à vitesse contrôlée pour l'amener dans le domaine β, avec une vitesse de refroidissement comprise entre 5°C par seconde et 30°C par seconde depuis au moins 1000°C jusqu'à au moins 800°C environ. Tous les recuits après trempe sont réalisés à une température inférieure à 800°C pour qu'on reste en phase α et qu'on n'arrive pas dans le domaine biphasé. La barre est ensuite recuite pour augmenter la taille des précipités, vers 715°C pendant quatre heures trente. La barre est ensuite filée, par un processus standard, sous forme d'ébauche, avantageusement à une température de 650°C environ. L'ébauche, pouvant subir un recuit éventuel vers 730°C, subit ensuite deux passes de laminage à froid, chaque laminage étant suivi d'un recuit à une température vers 730°C pour assurer un ΣA convenable.

Le trex obtenu subit plusieurs laminages successifs amenant progressivement le tube à sa dimension définitive. Chaque passe de laminage est suivie d'un recuit en atmosphère inerte, généralement sous argon. Les recuits intermédiaires sont avantageusement effectués vers 700°C alors que le recuit final de détente sera généralement comprise entre 470°C et 500°C.

## Revendications

1. Procédé de fabrication de tube pour gaine de crayons de combustible nucléaire, suivant lequel :
on prépare une barre en alliage à base de zirconium, dont les seuls éléments d'addition sont, en poids, 0,18 à 0,25% de fer, 0,07 à 0,13% de chrome, 0,35 à 1,70% d'étain, 900 à 2300 ppm d'oxygène, 80 à 200 ppm de carbone et 50 à 120 ppm de silicium, le rapport Fe/Cr étant compris entre 1,6 et 3 ;
on file la barre sous forme d'ébauche, en phase α ;
on soumet l'ébauche en phase α à des passes de laminage successives en phase α sous forme de tubes d'épaisseur décroissante, chaque laminage étant suivi d'un traitement thermique intermédiaire de recuit en atmosphère inerte, à une température de 700°C à 750°C, le recuit final étant un recuit de détente à une température comprise entre 450°C et 500°C, tel que l'alliage soit de façon prédominante en phase α et l'ensemble des traitements de recuit étant tel que ΣA soit entre 2.10⁻¹⁷ et 2.10⁻¹⁶, ΣA désignant la somme, pour l'ensemble des dits recuits, des produits des temps t (en heures) et de l'exponentielle de -Q/RT, T étant la température en K et Q/R étant égal à 40 000 K⁻¹.

2. Procédé selon la revendication 1, caractérisé en ce que le recuit final de détente est sous argon et comporte un maintien d'au moins quatre heures entre 470°C et 500°C.

3. Procédé selon la revendication 1 ou 2, caractérisé en ce que les traitements métallurgiques et thermiques intermédiaires de recuit comprennent :
- au moins une séquence de laminage à froid et de recuit entre 700°C et 750°C, pendant une à trois heures ;
- des laminages successifs sous forme de tubes d'épaisseur décroissante avec recuits intermédiaires sous argon à une température comprise entre 640°C et 740°C avant le recuit final de détente entre 470°C à 500°C.

4. Procédé selon la revendication 3, caractérisé en ce que l'ébauche est obtenue par filage de la barre d'alliage en phase α sous forme de trex.

5. Procédé selon la revendication 4, caractérisé par une étape préliminaire d'amenée en phase α de la barre d'alliage destinée à être filée sous forme d'ébauche, par recuit à partir de à phase β à une température comprise entre 680°C et 730°C pendant quatre à six heures, avantageusement environ cinq heures.

6. Procédé selon la revendication 5, caractérisé en ce que, avant amenée de la barre en phase α par recuit, la barre est amenée en phase β par trempe à une vitesse de refroidissement initiale comprise entre 5°C par seconde et 30°C par seconde à partir d'une température supérieure à 1000°C et jusqu'à 800°C environ.

7. Procédé selon l'une quelconque des revendications précédentes, caractérisé en ce que le rapport Fe/Cr est compris entre 2,2 et 2,6.

8. Procédé suivant l'une quelconque des revendications 1 à 7, caractérisé en ce que l'alliage contient 1,20 à 1,70% d'étain, 0,18 à 0,24% de fer et 0,075 à 0,10% de chrome, le total des teneurs en fer et chrome étant compris entre 0,28 et 0,37%, 50 à 120 ppm de silicium et 80 à 200 ppm de carbone.

9. Procédé selon l'une quelconque des revendications 1 à 6, caractérisé en ce que l'alliage contient 0,18 à 0,24% de fer et 0,075 à 0,10% de chrome, 0,45 à 0,75% d'étain et 1900 à 2300 ppm d'oxygène, 50 à 120 ppm de silicium et 80 à 200 ppm de carbone.

10. Tube pour gaine de crayon de combustible nucléaire, en alliage à base de zirconium dont les seuls composants sont, en plus du zirconium, 0,18 à 0,25% de fer, 0,07 à 0,13% de chrome, 0,35 à 1,70% en poids d'étain, 900 à 2300 ppm d'oxygène, entre 80 et 200 ppm de carbone et entre 50 et 120 ppm de silicium, le rapport pondéral Fe/Cr étant compris entre 1,9 et 2,5, l'alliage étant de façon prédominante en phase α et contenant des précipités de Zr(Fe,Cr)₂ ayant une taille en majorité supérieure à 0,18µm.

11. Tube suivant la revendication 10, caractérisé en ce que l'alliage comporte une répartition du fer entre les précipités Zr(Cr/Fe)₂-Zr₂FeSi-Zr₂FeNi-Zr₂Fe et Zr₃Fe telle que le rapport Fe/Cr dans Zr(Cr/Fe)₂ soit compris entre 2,2 et 2,6.

12. Tube suivant la revendication 10 ou 11, caractérisé en ce que la teneur en chrome est comprise entre 0,075 et 0,10%.

## Claims

1. A method of manufacturing a tube for a nuclear fuel rod sheath, comprising the steps of:
preparing a bar of zirconium based alloy whose addition elements are only, by weight, 0.18% to 0.25% iron, 0.07% to 0.13% chromium, 0.35% to 1.70% tin, 900 ppm to 2300 ppm oxygen, 80 ppm to 200 ppm carbon, and 50 ppm to 120 ppm silicon, the Fe/Cr ratio being in the range 1.6 to 3;
drawing the bar into a blank, in α phase;
subjecting the blank in α phase to a plurality of successive rolling phases in α phase as tubes of progressively decreasing thickness, each rolling being followed with an intermediate annealing thermal treatment under an inert atmosphere at a temperature of from 700°C to 750°C, while the final annealing treatment is a stress releaving heat treatment at a temperature of from 450°C to 500°C such that the alloy be predominantly in α phase and the heat treatment as a whole being such that ΣA be between 2.10⁻¹⁷ and 2.10⁻¹⁶, ΣA designating the sum, over all of the heat treatments, of the products of the times t (in hours) multiplied by exp(-Q/RT), T being the temperature in K and Q/R being equal to 40,000 K⁻¹.

2. A method according to claim 1, characterizedin that the final stress relieving annealing passes is carried out at a temperature of from 470°C to 500°C.

3. A method according to claim 1 or 2, characterized in that the metallurgical treatments and the intermediate annealing heat treatments comprise:
- at least a sequence comprising cold working and reheating between 700°C and 750°C, for one to three hours;
- successive rolling steps into tubes of decreasing thickness with intermediate re-heating under argon at a temperature between 640°C and 740°C before the final stress relieving re-heating between 470°C and 500°C.

4. A method according to claim 3, characterized in that the blank is obtained by drawing the alloy bar as a trex in α phase.

5. A method according to claim 4, characterized in that a preliminary step of bringing said bar to be drawn into α-phase by annealing from the β-phase at a temperature of from 680°C to 750°C for four to six hours, preferably about 5 hours.

6. A method according to claim 5, characterized in that, before being reheated to α-phase, the bar is brought to the β-phase by quenching at an initial cooling speed of from 5°C/sec and 30°C/sec from a temperature higher than 1000°C, until the temperature is about 800°C.

7. A method according to any one of the preceding claims, characterized in that the Fe/Cr ratio is comprised between 2.2 and 2.6.

8. A method according to any one of claims 1-6, characterized in that the alloy comprises 1.20% to 1.70% tin, 0.18% to 0.24% iron and 0.075% to 0.10% chromium, the total amount of iron and chromium being of from 0.28% to 0.37%, 50 ppm to 120 ppm silicon and 80 ppm to 200 ppm carbon.

9. A method according to any one of claims 1-6, characterized in that the alloy contains 0.18% to 0.25% iron and 0.075% to 0.10% chromium, 0.45% to 0.75% tin and 1900 ppm to 2300 ppm oxygen, 50 ppm to 120 ppm silicon and 80 ppm to 200 ppm carbon.

10. A tube for a nuclear fuel rod sheath, of zirconium based alloy whose only constituents outside zirconium are 0.18% to 0.24% iron, 0.07% to 0.13% chromium, 0.35% to 1.70% tin, 900 to 2300 ppm oxygen, 80 ppm to 200 ppm carbon and 50 ppm to 120 ppm silicon, the Fe/Cr weight ratio being between 1.9 and 2.5, the alloy being predominantly in α-phase and containing Zr (Fe,Cr)₂ precipitates having a size predominantly higher than 0.18µm.

11. A tube according to claim 10, characterized in that the alloy has a distribution of iron between precipitates of Zr(Cr/Fe)₂-Zr₂FeSi-Zr₂FeNi-Zr₂Fe and Zr₃Fe such that the Fe/Cr ratio in Zr(Cr/Fe)₂ be between 2.2 and 2.6.

12. A tube according to claim 10 or 11, characterized in that the Cr content is between 0.075% and 0.10%.

## Patentansprüche

1. Verfahren zur Herstellung eines Hüllrohrs von Kernbrennstäben, mit den folgenden Schritten:
ein Stab aus einer Legierung auf der Basis von Zirkonium wird präpariert, bei dem die einzigen Zusatzelemente 0,18 bis 0,25 Gew.-% Eisen, 0,07 bis 0,13 Gew.-% Chrom, 0,35 bis 1,70 Gew.-% Zinn, 900 bis 2300 ppm Sauerstoff, 80 bis 200 ppm Kohlenstoff und 50 bis 120 ppm Silicium sind, wobei das Verhältnis Fr/Cr zwischen 1,6 und 3 liegt;
der Stab wird in Form eines Vorformlings in der α-Phase gepreßt;
der Vorformling in α-Phase wird in mehreren aufeinanderfolgenden Walzschritten in der α-Phase in die Form von Rohre mit abnehmender Dicke gebracht, wobei jedem Walzen eine Zwischentemperung mit Glühen in inerter Atomsphäre bei einer Temperatur zwischen 700 °C und 750 °C folgt, wobei das abschließende Glühen ein Spannungsfreiglühen bei einer Temperatur zwischen 450 °C und 500 °C ist, so daß die Legierung vorzugsweise in der α-Phase vorliegt, und die gesamten Glühvorgänge so erfolgen, daß ΣA zwischen 2·10⁻¹⁷ und 2·10⁻¹⁶ liegt, wobei ΣA die Summe der Produkte der Zeiten t (in Stunden) und der Exponentialfunktion von -Q/RT über alle Glühvorgänge ist, wobei T die Temperatur in Kelvin ist und Q/R bei 40 000 K⁻¹ liegt.

2. Verfahren nach Anspruch 1, dadurch gekennzeichnet, daß das abschließende Spannungsfreiglühen unter Argon bei einer Dauer von mindestens 4 Stunden zwischen 470 °C und 500 °C erfolgt.

3. Verfahren nach Anspruch 1 oder 2, dadurch gekennzeichnet, daß die metallurgischen Bearbeitungen und Zwischentemperungen mit Glühen aufweisen:
- mindestens eine Folge von Kaltwalzen und eine Folge des Glühens zwischen einer und drei Stunden bei einer Temperatur zwischen 700 °C und 750 °C;
- aufeinanderfolgende Walzungen zu Rohren mit abnehmender Dicke mit dazwischenliegenden Glühbehandlungen unter Argon bei einer Temperatur zwischen 640 °C und 740 °C vor dem abschließenden Spannungsfreiglühen zwischen 470 °C und 500 °C.

4. Verfahren nach Anspruch 3, dadurch gekennzeichnet, daß der Vorformling durch Pressen des Legierungsstabes in α-Phase in Form von Trex erhalten wird.

5. Verfahren nach Anspruch 4, gekennzeichnet durch einen Vorbereitungsschritt, bei dem der Legierungsstab, der in Form eines Vorformlings gepreßt werden soll, ausgehend von der β-Phase durch Glühen bei einer Temperatur zwischen 680 °C und 730 °C zwischen vier und sechs Stunden, vorteilhafterweise fünf Stunden, in die α-Phase überführt wird.

6. Verfahren nach Anspruch 5, dadurch gekennzeichnet, daß der Stab durch Abschrecken bei einer anfänglichen Abkühlungsgeschwindigkeit von zwischen 5 °C pro Sekunde und 30 °C pro Sekunde in die β-Phase gebracht wird, wobei von einer Temperatur oberhalb von 1000 °C bis ungefähr 800 °C ausgegangen wird, bevor der Stab durch Glühen in die α-Phase gebracht wird.

7. Verfahren nach einem der vorhergehenden Ansprüche, dadurch gekennzeichnet, daß das Verhältnis Fe/Cr zwischen 2,2 und 2,6 liegt.

8. Verfahren nach einem der Ansprüche 1 bis 7, dadurch gekennzeichnet, daß die Legierung 1,20 bis 1,70 % Zinn, 0,18 bis 0,24 % Eisen und 0,075 bis 0,10 % Chrom mit einem Gesamtgehalt an Eisen und Chrom zwischen 0,28 und 0,37 %, 50 bis 120 ppm Silicium und 80 bis 200 ppm Kohlenstoff enthält.

9. Verfahren nach einem der Ansprüche 1 bis 6, dadurch gekennzeichnet, daß die Legierung 0,18 bis 0,24 % Eisen und 0,075 bis 0,10 % Chrom, 0,45 bis 0,75 % Zinn und 1900 bis 2300 ppm Sauerstoff, 50 bis 120 ppm Silicium und 80 bis 200 ppm Kohlenstoff enthält.

10. Rohr für Kernbrennstäbe mit einer Legierung auf der Basis von Zirkonium, deren einzige Komponenten zusätzlich zum Zirkonium 0,18 bis 0,25 % Eisen, 0,07 bis 0,13 % Chrom, 0,35 bis 1,70 Gew.-% Zinn, 900 bis 2300 ppm Sauerstoff, zwischen 80 und 200 ppm Kohlenstoff und zwischen 50 und 120 ppm Silicium sind, wobei das Gewichtsverhältnis Fe/Cr zwischen 1,9 und 2,5 liegt, wobei die Legierung vorherrschend in der α-Phase vorliegt und Ausscheidungen von Zr(Fe, Cr)₂ mit einer Größe enthält, die größtenteils größer als 0,18 µm sind.

11. Rohr nach Anspruch 10, dadurch gekennzeichnet, daß die Legierung eine Verteilung des Eisens zwischen den Ausscheidungen Zr(Cr/Fe)₂-Zr₂FeSi-Zr₂FeNi-Zr₂Fe und Zr₃Fe aufweist, so daß das Verhältnis von Eisen zu Chrom in Zr(Cr/Fe)₂ zwischen 2,2 und 2,6 liegt.

12. Rohr nach Anspruch 10 oder 11, dadurch gekennzeichnet, daß der Chromgehalt zwischen 0,075 und 0,10 % liegt.
